Europäisches Patentamt

European Patent Office

Office européen des brevets

(19)

(11) Veröffentlichungsnummer : **0 122 443**
**B1**

(12) **EUROPÄISCHE PATENTSCHRIFT**

(45) Veröffentlichungstag der Patentschrift :
01.10.86

(21) Anmeldenummer : 84102560.4

(22) Anmeldetag : 09.03.84

(51) Int. Cl.⁴ : **G 21 C 13/08**

(54) **Einschliessungsanordnung.**

(30) Priorität : **15.03.83 SE 8301400**

(43) Veröffentlichungstag der Anmeldung :
**24.10.84 Patentblatt 84/43**

(45) Bekanntmachung des Hinweises auf die Patenterteilung : **01.10.86 Patentblatt 86/40**

(84) Benannte Vertragsstaaten :
**DE FR GB IT**

(56) Entgegenhaltungen :
**DE-A- 3 003 460**
**FR-A- 1 538 984**
**FR-A- 1 584 208**
**FR-A- 2 502 828**
**US-A- 3 893 270**
**JOURNAL OF BRITISH NUCLEAR ENERGY SOC.,
Band 14, Nr. 1, Januar 1975, Seiten 35-48; P.H.
MARGEN et al.: "PCRVs for BWRs - a new dimension
in LWR exploitation"**
**NUCLEAR STRUCTURAL ENGINEERING, Band 1,
1965, Seiten 224-231, North-Holland Publishing
Company, Amsterdam, NL; CHEN PANG TAN:
"Conceptual design of a prestressed concrete reactor pressure vessel"**

(73) Patentinhaber : **AB ASEA-ATOM**

**S-721 83 Västeras (SE)**

(72) Erfinder : **Norman, Hans**
**Bösebergsvägen 14**
**S-722 33 Västeras (SE)**

(74) Vertreter : **Boecker, Joachim, Dr.-Ing.**
**Rathenauplatz 2-8**
**D-6000 Frankfurt a.M. 1 (DE)**

EP 0 122 443 B1

## Beschreibung

Die vorliegende Erfindung betrifft eine Einschließungsanordnung gemäß dem Oberbegriff des Anspruches 1.

Genauer gesagt betrifft die Erfindung einen Betondruckbehälter, der Betriebsdrücke im Bereich von 20 bis 120 bar aufnehmen muß und in dem eine Unterhalt erfordernde Ausrüstung eingebracht wird. Bei einem solchen Druckbehälter bekannter Ausführung erfordert die Handhabung des Deckels infolge seines großen Gewichtes viel Arbeit und Zeit. Dies gilt besonders dann, wenn der Betondruckbehälter im Stande sein muß, eine Ausrüstung aufzunehmen, für deren Einbringung eine Öffnung mit verhältnismäßig großem Querschnitt erforderlich ist. Dies ist z. B. dann der Fall, wenn die Einschließungsanordnung einen Reaktorkern mit zugehörigem Wärmeaustauscher aufnehmen soll, und der Einschließungsraum eine nach oben gerichtete Öffnung haben muß, deren Durchmesser im Bereich von 8 bis 16 m liegt und mindestens 70 % des größten Durchmessers des Einschließungsraums beträgt. In solchen Fällen hat ein in bekannter Weise festgehaltener Deckel aus Stahl oder Beton ein so großes Gewicht, daß seine Handhabung mit sehr großen Schwierigkeiten verbunden ist.

Der Erfindung liegt die Aufgabe zugrunde, eine Einschließungsanordnung der eingangs genannten Art zu entwickeln, bei der die Festspannvorrichtung für den Deckel derart ausgebildet und angeordnet ist, daß der Deckel schwächer und folglich leichter als bei bekannten Einschließungsanordnungen ausgeführt werden kann, wobei zugleich die Konstruktion der Einspannvorrichtungen einfach sein soll und die Montage- bzw. Demontagezeit kurz sein soll.

Zur Lösung dieser Aufgabe wird gemäß der Erfindung eine Einschließungsanordnung vorgeschlagen, die erfindungsgemäß die im kennzeichnenden Teil des Anspruches 1 genannten Merkmale hat.

Vorteilhafte Ausgestaltungen der Erfindung sind in den weiteren Ansprüchen genannt.

Anhand des in den Figuren gezeigten Ausführungsbeispiels soll die Erfindung näher erläutert werden. Es zeigen

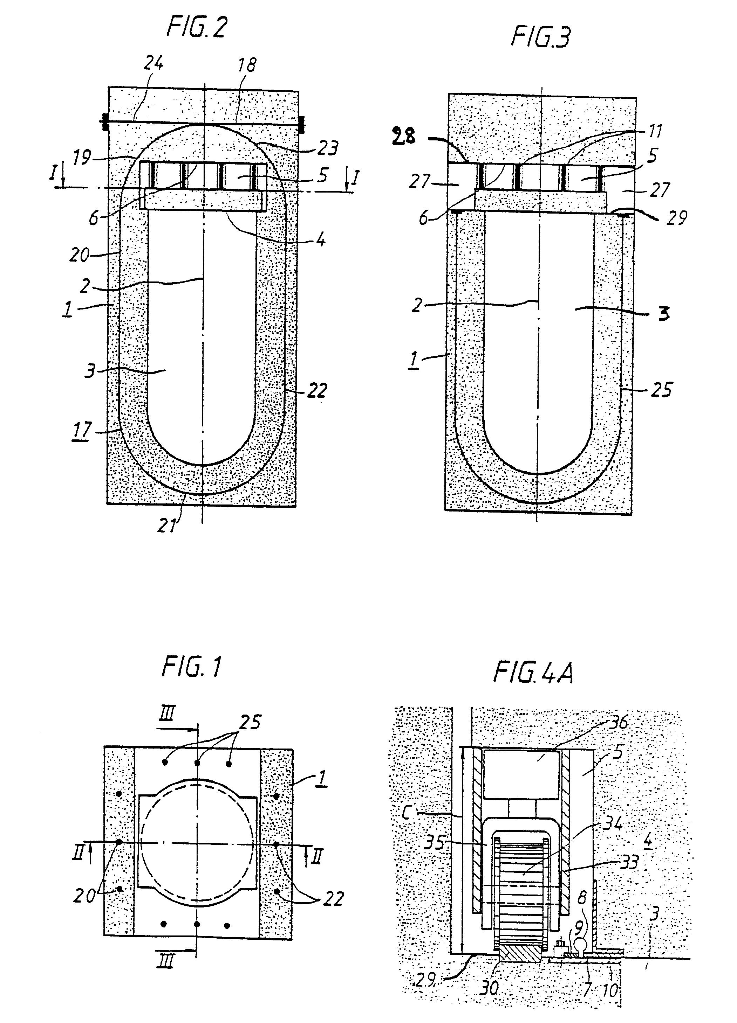

Figur 1 eine vereinfachte Prinzipdarstellung einer Einschließungsanordnung nach der Erfindung im Radialschnitt längs der Linie I-I in Figur 2,

Figur 2 einen Axialschnitt längs der Linie II-II in Figur 1,

Figur 3 einen Axialschnitt längs der Linie III-III in Figur 1,

Figur 4 eine detaillierte Darstellung der in den Figuren 1 bis 3 gezeigten Einschließungsanordnung in partiellem Axialschnitt längs der Linie II-II in Figur 1 bzw. längs der Linie IV-IV in Figur 5,

Figur 4A in größerem Maßstab ein Detail aus Figur 4,

Figur 5 einen Radialschnitt längs der Linie V-V in Figur 4,

Figur 6 einen Radialschnitt längs der Linie VI-VI in Figur 4,

Figur 7 einen Radialschnitt längs der Linie VII-VII in Figur 4,

Figur 8 einen Radialschnitt längs der Linie VIII-VIII in Figur 4,

Figur 9 einen Axialschnitt längs der Linie IX-IX in Figur 5.

In den Figuren bezeichnet 1 einen Betonkörper mit einem Hohlraum, der im wesentlichen wie ein Rotationskörper mit vertikaler Rotationsachse 2 aufgebaut ist. Dieser Hohlraum ist in zwei Teilräume unterteilt, einen Einschließungsraum 3, der mittels eines Deckels 4 druckdicht verschließbar ist, und einen axial neben dem Einschließungsraum 3 liegenden Teilraum 5, der in axialer Richtung von einer außerhalb des Deckels 4 befindlichen, im wesentlichen transversal (senkrecht zur Längsachse des Einschließungsraumes) verlaufenden, in dem Betonkörper 1 ausgebildeten Begrenzungsfläche 6 begrenzt wird.

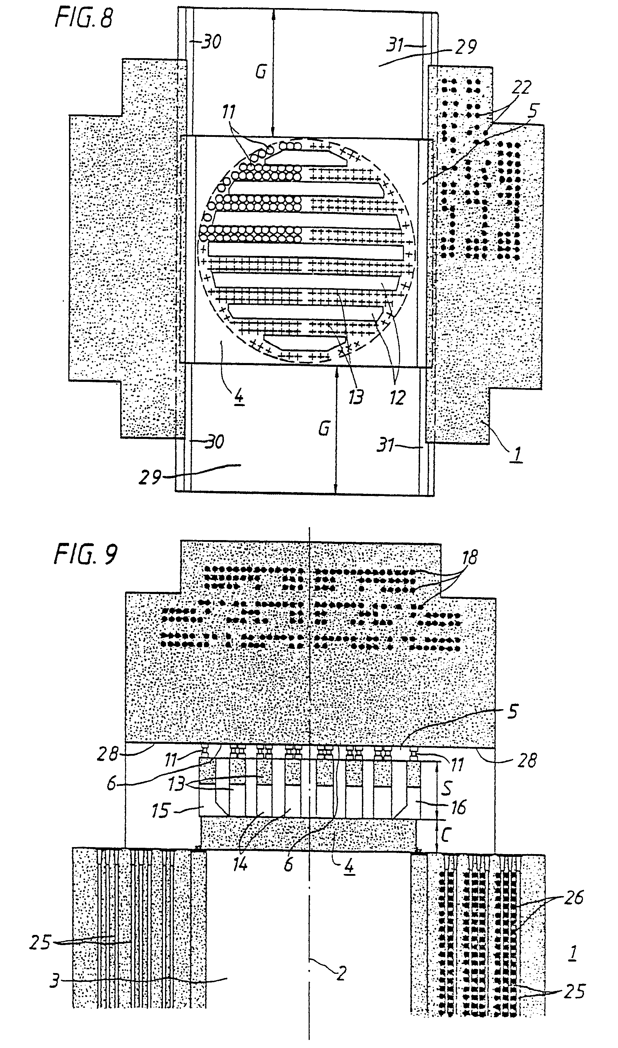

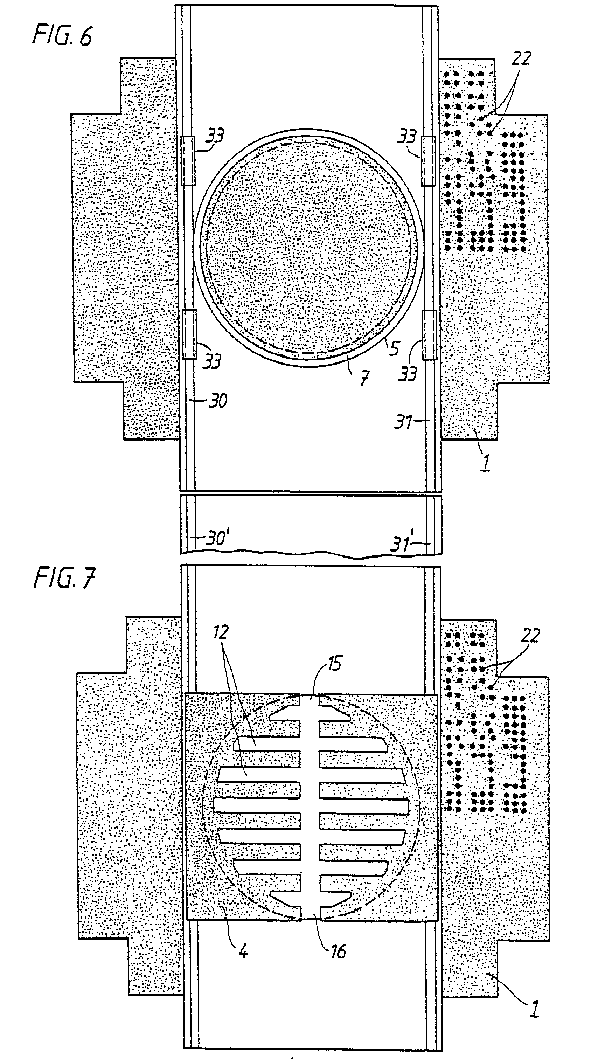

Der Einschließungsraum 3 hat eine nach oben gerichtete kreisförmige Öffnung, die längs ihres Umfanges mit einem flachen Stahlring 7 versehen ist, der am Betonkörper 1 befestigt ist. Der Stahlring ist mit einer Dichtungsvorrichtung versehen, die einen hohlen Stahlring 8 enthält. Dieser ist längs seines ganzen Umfangs derart aufgeschlitzt, daß ein ringförmiger Spalt gebildet wird. Die eine Kante des Spaltes ist an einem Stahlring 9 festgeschweißt, der am Stahlring 7 befestigt ist, während die andere Kante des Spaltes an einem metallischen Dichtungsring 10 festgeschweißt ist. Bei geringfügigem Anheben des Deckels 4 kann ein Zwischenraum zwischen dem Dichtungsring 10 und dem Stahlring 7 entstehen. Der Dichtungsring 10 wird mittels mehrerer nicht dargestellter Schrauben gegen eine ringförmige Dichtungsfläche am Deckel 4 gepreßt. Zwischen dem Deckel 4 und der obengenannten im Betonkörper 1 ausgebildeten Begrenzungsfläche 6 sind mehrere druckkraftübertragende Elemente 11 angeordnet. Der Deckel 4 besteht aus Spannbeton und hat einen unteren, kreiszylindrischen massiven Abschnitt, dessen axiale Länge mit C bezeichnet ist (Figur 9), sowie einen oberen rechteckigen Abschnitt, dessen axiale Länge mit S bezeichnet ist. Bei den Drücken und den Drucktankvolumina, bei denen eine Konstruktion nach der Erfindung vorzugsweise angewendet werden kann, ist S mindestens 30 % größer als C, während C in dem Bereich von 0,8-3 m liegt. Bei dem in den Figuren gezeigten Beispiel betragen die Abmessungen C und S 2 m bzw. 3,6 m. Der obere, rechteckige Abschnitt des Deckels 4 enthält einen schalenförmigen, im wesentlichen kreiszylindrischen Raum, der in sieben, im wesentlichen parallelepipedische, oben offene Räume 12 durch sechs vertikale, untereinander parallele Wände 13 aufgeteilt ist. Jede Wande 13 hat eine Türöffnung 14 (Figur 9), welche zusammen mit zwei Außentüren 15 und 16 die Räume 12 für das Personal zugänglich macht.

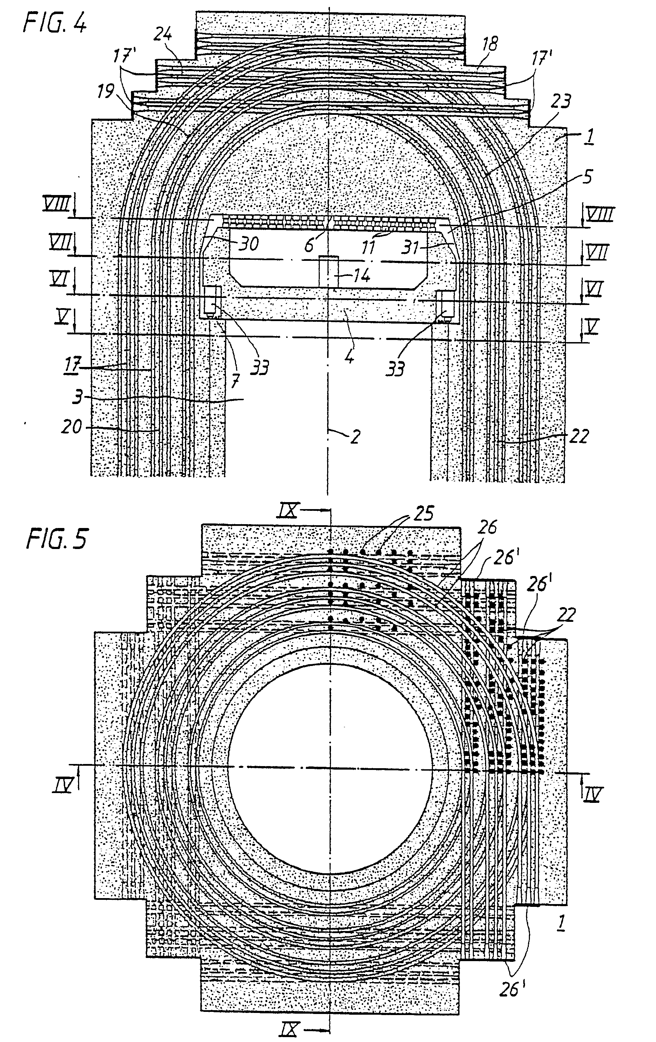

Jede Kraftübertragungswand 13 hat eine horizontal nach oben gerichtete Kraftübertragungsfläche, auf welcher mehrere druckkraftübertragende Elemente gleichmäßig verteilt sind. Derartige Elemente sind außerdem auf einem Kreis längs der Kante des vorgenannten schalenförmigen Raums angeordnet. Jedes druckkraftübertragende Element 11 besteht einfach aus einem massiven oder hohlen Stahlkörper. Alternativ kann jedes Element 11 zwei mit Gewinde versehene Teile enthalten, wobei eine korrekte axiale Länge dadurch eingestellt werden kann, daß das eine Teil in das andere geschraubt wird, was manuell und/oder dadurch geschehen kann, daß die Elemente 11 einzeln oder gruppenweise mit fernbedienbaren Antriebsvorrichtungen versehen werden. Beim Verschließen des Einschließungsraumes 3 mittels des Deckels 4 sind die druckkraftübertragende Elemente 11 unbelastet oder nur sehr schwach belastet, solange im Einschließungsraum kein Überdruck herrscht. Wenn dieser unter Druck gesetzt wird, kann es zugelassen werden, daß der Deckel 4 sich ein wenig anhebt, was geschehen kann, ohne daß die Dichtungswirkung der aus den Bauteilen 7, 8, 9, 10 bestehenden Dichtungsvorrichtung vermindert wird. Ein unzulässiges Anheben des Deckels 4 wird durch die Elemente 11 verhindert, wobei die gesamte Kraft, die diese auf die transversale innere Begrenzungsfläche 6 des Betonkörpers übertragen, mit steigendem Druck im Einschließungsraum 3 zunimmt. Diese Kraft hat zur Folge, daß der Betonkörper 1 mit großen, axial gerichteten Zugkräften belastet wird. Aus diesem Grunde ist der Betonkörper 1 mit mehreren langgestreckten Spannschlingen 17 versehen, die im wesentlichen parallel zu einer Axialebene durch die Linie IV-IV in Figur 5 angeordnet sind. Jede Spannschlinge 17 enthält ein Bündel vorgespannter, schlingenförmiger Stahlstange. Jede Spannschlinge 17 ist in einem entsprechend ausgebildeten Kanal im Betonkörper 1 angeordnet, wobei jeder Kanal mit einem metallischen, dünnwandigen, in dem Beton fest eingegossenen Futterrohr versehen ist. Jede Spannschlinge 17 besteht aus einem ersten, axial außerhalb der Begrenzungsfläche 6 liegenden geraden Abschnitt 18, der sich transversal von einer äußeren Begrenzungsfläche des Betonkörpers 1 bis zu einer Axialebene durch die Linie IX-IX in Fig. 5 erstreckt, einem mit diesem Abschnitt 18 zusammenhängenden, zweiten Abschnitt 19, der einen Bogen von 90 Grad bildet, einem hiermit zusammenhängenden, axial verlaufenden dritten Abschnitt 20, einem mit dem Abschnitt 20 zusammenhängenden, halbkreisförmigen vierten Abschnitt 21, einem hiermit zusammenhängenden, axial verlaufenden fünften Abschnitt 22, einem mit dem Abschnitt 22 zusammenhängenden sechsten Abschnitt 23, der einen Bogen von 90 Grad bildet, und schließlich einen geraden, mit dem Abschnitt 23 zusammenhängenden, transversal verlaufenden siebten Abschnitt 24, der sich bis zu einer äußeren Begrenzungsfläche des genannten Betonkörpers erstreckt.

Der Betonbehälter 1 enthält ferner mehrere U-förmige, in je einem zugeordneten U-förmigen Kanal angeordnete Bündel 25 aus U-förmigen vorgespannten Stahlbügeln, wobei jedes Bündel 25 in einer zugeordneten Vertikalebene liegt, die parallel zu der Axialebene durch die Linie IX-IX in Figur 5 verläuft.

Außerdem enthält der Betonkörper 1 mehrere horizontale, im wesentlichen kreisförmige Spannschlinge 26, welche aus je einem Bündel vorgespannter, entsprechend geformter Stahlschlingen besteht. Jede Spannschlinge 26 ist in einem entsprechend ausgebildeten im Betonkörper 1 vorhandenen mit Futterrohr versehenen Kanal angeordnet.

Das Spannen der langgestreckten Spannschlinge 17, der U-förmigen Bündel 25 und der kreisförmigen Spannschlinge 26 erfolgt erst, nachdem der Betonkörper 1 erstarrt und mehrere Wochen ausgehärtet ist. Die Enden werden dabei an metallischen Verankerungsplatten 17' bzw. 25' und 26' befestigt, die an den äußeren Begrenzungsflächen des Betonkörpers angeordnet sind.

Der Teilraum 5 ist an zwei horizontale, im Betonkörper 1 ausgebildete Transporttunnel 27 für den Deckel 4 angeschlossen. Alternativ kann der Betonkörper 1 mit nur einem solchen Transporttunnel ausgeführt werden. Jeder Transporttunnel 27 wird nach oben von einer ebenen Tunneldecke 28, die in derselben Horizontalebene liegt, wie die vorgenannte horizontale Begrenzungsfläche 6, und nach unten von einem Tunnelboden 29 begrenzt, der auf gleicher Höhe wie die obere Fläche des ebenen Stahlringes 7 liegt. Seitlich wird jeder Transporttunnel 27 von zwei aufeinander gerichteten Wandflächen begrenzt, deren Projektionen in Tunnelrichtung im wesentlichen geradlinig sind und jeweils mit einer entsprechenden Projektion einer Seitenwand des Teilraumes 5 zusammenfallen.

Da der Betonkörper 1 unmittelbar über dem Teilraum 5 einen Abschnitt hat, dessen äußeres horizontales Maß in der Vertikalebene, in der die Linie IX-IX liegt, etwas kleiner als das entsprechende horizontale Maß des Betonkörpers unterhalb des Teilraumes 5 ist (s. Fig. 9), ist die Länge jedes Tunnelbodens 29 in der Tunnelrichtung etwas größer als die entsprechende Länge von Decke und Wänden des Transporttunnels 27.

Zwischen dem Teilraum 5 und den Transporttunneln 27 gibt es keinen ausgeprägten Übergang. Nachstehend wird davon ausgegangen, daß jeder Tunnel 27 an der nächstgelegenen vertikalen Fläche des Deckels 4 beginnt, was bedeutet, daß G in Fig. 8 das horizontale Maß jedes Tunnelbodens 29 angibt.

Zwei gerade Transportschienen 30, 31 aus Stahl sind auf der horizontalen Betonfläche eingelassen, die von den beiden Tunnelböden 29 sowie der unteren horizontalen Begrenzungsfläche des Teilraums 5 gebildet wird. Der Deckel 4 ist mit vier Radträgern 33 versehen, die gleichmäßig auf die beiden Transportschienen 30 und 31 verteilt sind. Jeder Radträger enthält mehrere Räder 34, die auf den Transportschienen laufen.

Die Räder 34 sind in jedem Radträger 33 mit ihren Achsen in einem Körper 35 mit U-förmigem Querschnitt befestigt, der in vertikal verlaufenden Führungsbahnen des Radträgers geführt wird. Der Körper 35 ist mechanisch mit den Kolben mehrerer am Deckel 4 befestigter hydraulischer Zylinder 36 verbunden.

In den Einschließungsraum 3 münden mehrere von der Außenseite des Betonkörpers 1 eingefügte in den Figuren nicht dargestellte Rohrleitungen für Dampf- und/oder eine Flüssigkeit.

Wenn der Deckel 4 entfernt werden soll, wird zunächst der Druck im Einschließungsraum 3 herabgesetzt, und danach werden die druckkraftübertragenden Elemente 11 entweder entfernt oder ihre axiale Länge wird verkleinert. Anschließend wird der Druck in den hydraulischen Zylindern 36 soweit erhöht, daß zwischen dem Dichtungsring 10 und der zugehörigen Dichtungsfläche des Deckels 4 ein Spalt entsteht. Dann wird auf den Deckel 4 eine horizontale Kraft ausgeübt. Dabei rollen die Räder auf den Transportschienen 30 und 31 und der Deckel wird durch einen der beiden Transporttunnel 27 zu einer außerhalb des Betonkörpers vorhandenen Transportbahn transportiert, die zwei äußere Transportschienen 30' und 31' aufweist, die sich an die Transportschienen 30 bzw. 31 anschließen.

Eine Einschließungsanordnung gemäß der Erfindung kann mit Vorteil als Druckbehälter in bestimmten Kernreaktoren verwendet werden, beispielsweise in einem Reaktor gemäß der DE-A 32 10 745.

Die oben beschriebene Einschließungsanordnung stellt nur eine von weiteren möglichen Ausführungsformen der Erfindung dar. So ist es auch möglich, die im Kanal angeordneten Spannschlingen in größerem oder kleinerem Umfange durch Armierungseisen zu ersetzen, die in vorgespanntem Zustand in den Betonkörper 1 eingegossen werden.

Ferner können die Räder 34 durch Gleitkufen ersetzt werden.

**Patentansprüche**

1. Einschließungsanordnung mit einem langgestreckten Betonkörper (1) und einem in diesem angeordneten im wesentlichen wie ein Rotationskörper um die Längsachse (2) geformten, für einen Reaktorkern bestimmten Einschließungsraum (3), der in axialer Richtung eine mit Deckel (4) versehene Öffnung hat, dadurch gekennzeichnet, daß der Einschließungsraum (3) ein Teil eines in dem Betonkörper (1) vorhandenen Hohlraums ist, welcher auch einen axial außerhalb der genannten Öffnung befindlichen Teilraum (5) umfaßt, der in axialer Richtung von einer axial außerhalb des Deckels (4) und mit axialem Abstand von diesem liegenden, im wesentlichen transversal (senkrecht zur Längsachse des Einschließungsraums) verlaufenden Begrenzungsfläche (6) begrenzt wird, wobei mehrere druckkraftübertragende Elemente (11) zur Überbrückung des Abstandes zwischen dieser Begrenzungsfläche (6) und dem Deckel (4) vorhanden sind, und daß der Teilraum (5) an mindestens einen transversal gerichteten, an der Außenseite des Betonkörpers mündenden Transporttunnel (27) für den Deckel angeschlossen ist.

2. Einschließungsanordnung nach Anspruch 1, dadurch gekennzeichnet, daß der Betonkörper (1) mehrere in dem Beton angeordnete, den genannten Hohlraum umschließende vorgespannte, im wesentlichen in ihrer zugeordneten Axialebene liegende Schlingen (22) aus metallischem Material enthält.

3. Einschließungsanordnung nach Anspruch 2, dadurch gekennzeichnet, daß jede Schlinge (22) aus folgenden Abschnitten besteht: einem ersten, axial außerhalb der Begrenzungsfläche (6) liegenden geraden Abschnitt (18), der sich transversal von einer äußeren Begrenzungsfläche des Betonkörpers (1) bis zu einer gedachten senkrecht zu dem ersten Abschnitt liegenden Axialebene (IX-IX) erstreckt, einem mit dem ersten Abschnitt (18) zusammenhängenden zweiten Abschnitt (19), der im wesentlichen einen Kreisbogenabschnitt von 90 Grad bildet, einem mit dem letzteren zusammenhängenden, axial verlaufenden dritten Abschnitt (20), einem mit dem dritten Abschnitt zusammenhängenden, halbkreisförmigen vierten Abschnitt (21), einem mit dem letzteren zusammenhängenden, axial verlaufenden fünften Abschnitt (22), einen mit dem fünften Abschnitt zusammenhängenden sechsten Abschnitt (23), der im wesentlichen einen Kreisbogenabschnitt von 90 Grad bildet, und einem geraden mit dem letztgenannten zusammenhängenden transversal verlaufenden siebten Abschnitt (24), der sich bis zu der äußeren Begrenzungsfläche des Betonkörpers erstreckt (Fig. 2).

4. Einschließungsanordnung nach Anspruch 2, dadurch gekennzeichnet, daß jede Schlinge in je einem schlingenförmigen, in den Betonkörper (1) eingegossenen Kanal angeordnet sind.

5. Einschließungsanordnung nach einem der vorhergehenden Ansprüche, dadurch gekennzeichnet, daß zur Dichtung zwischen dem Deckel (4) und dem Rand der Öffnung des Einschließungsraumes einerseits am Rand der Öffnung des Einschließungsraumes ein Stahlring (7) vorhanden ist und andererseits am Deckel (4) ein metallischer Dichtungsring (10) angeordnet ist, welcher mit seinem Umfang an die eine Kante eines geschlitzten hohlen Stahlringes (8) mit vorzugsweise kreisförmigem Querschnitt angeschweißt ist, an dessen anderer Kante ein weiterer Stahlring (9) angeschweißt ist, der lösbar an dem Stahlring (7) befestigbar ist.

6. Einschließungsanordnung nach einem der vorhergehenden Ansprüche, dadurch gekennzeichnet, daß die druckübertragenden Elemente (11) in der Weise lösbar sind, daß sie entweder entfernbar oder in ihrer axialen Länge verkürzbar sind, und daß der Deckel (4) in Richtung des oder der Transporttunnel (27) rollend oder gleitend auf Schienen bzw. Kufenführungen geführt ist, auf denen der Deckel (4) in horizontaler Richtung durch den Transporttunnel aus seiner Position über dem Einschließungsraum wegschiebbar ist.

7. Einschließungsanordnung nach Anspruch 6, dadurch gekennzeichnet, daß die am Deckel (4) vorhandenen Räder (34) oder Kufen in Richtung der Rotationsachse (2) des Betonkörpers (1) verschiebbar sind.

8. Einschließungsanordnung nach einem der Ansprüche 5 bis 7, dadurch gekennzeichnet, daß der Stahlring (7) und/oder der Stahlring (9) als flacher Stahlring ausgebildet ist/sind.

## Claims

1. Enclosing device comprising an elongated concrete body (1) and a chamber (3) formed therein for accommodating a reactor core, said chamber (3) being substantially defined by a solid of revolution about the longitudinal axis (2) and having an opening directed in the axial direction and provided with a cover (4), characterized in that the chamber (3) constitutes part of a cavity defined within said concrete body (1), said cavity also comprising a partial space (5) located axially outside said opening, said partial space being confined in the axial direction by a limiting surface (6), which extends substantially transversally (perpendicularly to the longitudinal axis of the chamber) and is located axially outside said cover (4) in an axially distance from the latter, a plurality of pressure transmitting elements (11) being arranged to bridge the distance between said limiting surface (6) and said cover (4), and that said partial space (5) is connected to at least one transversally extending transport tunnel (27) for said cover, said transport tunnel opening out at the outside of said concrete body.

2. Enclosing device according to claim 1, characterized in that the concrete body (1) comprises a plurality of pre-stressed loops (22) of metallic material arranged in the concrete and surrounding said cavity, each loop lying substantially in its associated axial plane.

3. Enclosing device according to claim 2, characterized in that each loop (22) consists of the following portions : a first straight portion (18) axially outside said limiting surface (6) extending transversally from an outer limiting surface of the concrete body (1) to an imaginary axial plane (IX-IX) perpendicular to said first portion, a second portion (19) connected to said first portion (18) said second portion forming substantially a circular portion of 90°, an axially extending third portion (20) connected to said second portion, a semi-circular fourth portion (21) connected to the third portion, an axially extending fifth portion (22) connected to said fourth portion, a sixth portion (23) connected to said fifth portion and forming substantially a circular arc portion of 90°, and a transversally extending seventh portion (24) connected to the said sixth portion and extending to the outer limiting surface of the concrete body (Figure 2).

4. Enclosing device according to claim 2, characterized in that the loops are arranged each in a loop-formed channel cast in said concrete body (1).

5. Enclosing device according to any of the preceding claims, characterized in that for sealing between said cover (4) and the edge of the opening of said chamber, on the one hand the edge of the opening of the chamber is provided with a steel ring (7) and on the other hand the cover (4) is provided with a metallic sealing ring (10) welded with its circumference to one edge of a slitted hollow steel ring (8) of preferably circular cross-section, to the other edge of which a further steel ring (9) is welded, which is detachably secured to the steel ring (7).

6. Enclosing device according to any of the preceding claims, characterized in that the pressure-force transmitting elements (11) are detachable such that they can either removed or shortened in their axial length, and that the cover (4) are guided in the direction of the transport tunnel or transport tunnels (27) in a rolling or sliding manner on rails or skidding means, on which the cover (4) can be moved away horizontally through the transport tunnel from its position atop said chamber (7).

7. Enclosing device according to claim 6, characterized in that the wheels (34) or skids attached to the cover (4) are movable in the direction of the rotational axis (2) of the concrete body (1).

8. Enclosing device according to any of claims 5 to 7, characterized in that the steel ring (7) and/or the steel ring (9) is/are formed as a flat steel ring.

## Revendications

1. Dispositif de confinement avec un corps allongé en béton (1) et avec une chambre de confinement (3) disposée dans ce dernier, conformée essentiellement comme un corps de rotation autour de l'axe longitudinal (2) et destinée à un cœur de réacteur, ladite chambre de confinement (3) étant pourvue, en direction axiale, d'une ouverture comportant un couvercle (4), caractérisé par le fait que la chambre de confinement (3) est une partie d'une cavité présente dans le corps en béton (1), qui comporte également une chambre partielle (5) se situant axialement en dehors de ladite ouverture et délimitée dans le sens axial par une surface de délimitation (6) qui s'étend axialement en dehors du couvercle (4) et à distance axiale par rapport à ce dernier, sensiblement dans le sens transversal (perpendiculaire à l'axe longitudinal de la chambre de confinement), plusieurs éléments (11) capables de transmettre des forces de pression étant prévus pour entretoiser la distance entre cette surface de délimitation (6) et le couvercle, et que la chambre partielle (5) est reliée à au moins un tunnel de transport (27) pour le couvercle, dirigé transversalement et débouchant du côté extérieur du corps en béton.

2. Dispositif de confinement selon la revendication 1, caractérisé par le fait que le corps en béton (1) comporte plusieurs boucles précontraintes (22) en un matériau métallique, disposées dans le béton, entourant ladite cavité et situées essentiellement dans son plan axial associé.

3. Dispositif de confinement selon la revendication 2, caractérisé par le fait que chaque boucle (22) est constituée par les sections suivantes : une première section droite (18) qui se situe axialement en dehors de la surface de délimitation (10), et qui s'étend transversalement d'une surface de délimitation extérieure du corps en béton (1) jusqu'à un plan axial imaginaire (IX-IX) qui se situe perpendiculairement à ladite première section, une seconde section (19), qui est contiguë à la première section (18), et qui forme sensiblement une section d'arc de cercle de 90 degrés, une troisième section (20) qui est contiguë avec celle mentionnée en dernier lieu et qui s'étend axialement, une quatrième section (21) qui est contiguë avec la troisième section et qui a la forme d'un demi-cercle, une cinquième section (22) qui est contiguë à la précédente et qui s'étend axialement, une sixième section (23) qui est contiguë avec la cinquième section et qui forme sensiblement une section en arc de cercle de 90 degrés, et une septième section droite et transversale (24) qui est contiguë avec la section mentionnée en dernier lieu, et qui s'étend jusqu'à la surface de délimitation extérieure du corps en béton (figure 2).

4. Dispositif de confinement selon la revendication 2, caractérisé par le fait que chaque boucle est disposée dans un canal de la forme d'une boucle et qui est coulée dans le corps en béton (1).

5. Dispositif de confinement selon l'une des revendications précédentes, caractérisé par le fait que pour l'étanchéification entre le couvercle (4) et le bord de l'ouverture de la chambre de confinement, il est prévu, d'une part, sur le bord de l'ouverture de la chambre de confinement, une bague en acier (7) et, d'autre part, sur le couvercle (4), une bague d'étanchéité métallique (10) qui est soudée par sa périphérie à l'un des bords d'un anneau en acier creux et fendu (8), ayant de préférence une section transversale circulaire, et à l'autre bord duquel est soudé un second anneau en acier (9) qui est susceptible d'être fixé de façon détachable à l'anneau en acier (7).

6. Dispositif de confinement selon l'une des revendications précédentes, caractérisé par le fait que les éléments (11) qui sont susceptibles de transmettre des pressions sont détachables de telle façon qu'ils peuvent soit être enlevés, soit être raccourcis dans leur longueur axiale, et que le couvercle (4) est guidé, dans le sens du ou des tunnels de transport (27) en roulant ou en glissant sur des rails ou sur des guidages à patins, sur lesquels le couvercle (4) est susceptible d'être déplacé dans le sens horizontal à travers le tunnel de transport, à partir de sa position au-dessus de la chambre de confinement.

7. Dispositif de confinement selon la revendication 6, caractérisé par le fait que les roues (34) ou patins qui sont prévus sur le couvercle (4) sont susceptibles d'être déplacés en direction de l'axe de rotation (2) du corps en béton (1).

8. Dispositif de confinement selon l'une des revendications 5 à 7, caractérisé par le fait que l'anneau en acier (7) et/ou l'anneau en acier (9) est ou sont réalisés sous la forme d'un anneau en acier plat.

FIG.2

FIG.3

FIG.1

FIG.4A

FIG. 4

FIG. 5

FIG. 8

FIG. 9

FIG. 6

33    33

33    33

22

5

7

30

1

30'    31'

FIG. 7

12

15

22

4    16

1

4